Europäisches Patentamt

European Patent Office

Office européen des brevets

(11) Publication number: **0 476 142 A1**

# EUROPEAN PATENT APPLICATION
## published in accordance with Art. 158(3) EPC

(21) Application number: 91906280.2

(22) Date of filing: **13.03.91**

(86) International application number:
**PCT/JP91/00355**

(87) International publication number:
**WO 91/14978 (03.10.91 91/23)**

(51) Int. Cl.5: **G05B 19/18**

(30) Priority: **29.03.90 JP 816/91**

(43) Date of publication of application:
**25.03.92 Bulletin 92/13**

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(84) **DE FR GB**

(72) Inventor: **IKEDA, Yoshiaki, Fanuc Mansion**
**Harimomi 6-310**
**3537-1, Shibokusa, Oshinomura,**
**Minamitsuru-gun**

Yamanashi 401-05(JP)
Inventor: **OTSUKA, Shoichi, Fanuc Mansion**
**Harimomi 7-302**
**3539-1, Shibokusa, Oshinomura,**
**Minamitsuru-gun**
**Yamanashi 401-05(JP)**
Inventor: **HIRAGA, Mitsuru, Fanuc Dai-3**
**Vira-karamatsu**
**3527-1, Shibokusa, Oshinomura,**
**Minamitsuru-gun**
**Yamanashi401-05(JP)**

(74) Representative: **Brunner, Michael John**
**GILL JENNINGS & EVERY 53-64 Chancery**
**Lane**
**London WC2A 1HN(GB)**

(54) **NUMERIC CONTROLLER HAVING A PLURALITY OF DISPLAYS.**

(57) A numeric controller including a display with a built-in power supply and a power supply-dependent type display outside the numeric controller. Power supply synchronization means is provided which turns ON/OFF a power supply (4) of a power source built-in type display B (3) in response to ON/OFF of the power supply (2) of a numeric controller main body (1). When the power supply of the numeric controller main body (1) is turned ON/OFF by this power supply synchronization means (9), the power supply (4) of the display B (3) is turned ON/OFF synchronously and a power supply to be supplied (6) of the power supply-dependent type display A (5) is turned ON/OFF, as well. Accordingly, a clear circuit (10) is operated by using a button (11) of the display A (5).

F i g. 1

Technical Field

The present invention relates to a numerical control system having a plurality of display units, and more particularly to a numerical control system with a plurality of display units that have respective built-in power sources synchronized with the power source of a numerical control apparatus.

Background Art

Numerical control systems include a numerical control apparatus and a display unit connected thereto for displaying various items of information that are visually perceived by the operator to assist in performing the operation. For example, while a workpiece is being machined by a numerical control apparatus, the machining condition can be monitored by a position display unit on a real-time basis. Furthermore, a DPL/MDI (display control panel) allows the operator to monitor the inputting and editing of a part program, the setting of parameters, and internal conditions in CNC apparatus. These display units can be classified into display units with built-in power sources and display units energizable by external power sources. There are also different power sources for display units that are classified according to applications and sizes, e.g., a power source with a converter for converting AC electric power to DC electric power, and a battery power source.

Some conventional numerical control systems have a plurality of display units. However, the power source of a numerical control apparatus itself and the built-in power source of a display unit connected thereto are not synchronized with each other when they are turned on/off. Therefore, even when the power source of the numerical control apparatus is turned on/off, the external power source of a display unit cannot simultaneously be turned on/off through the display unit with a built-in power source. It has been unable to use a special function that relies on a synchronism with the turning-on of the power source of the numerical control apparatus (e.g., the function of erasing the contents of a program stored in the numerical control apparatus when the power source of the numerical control apparatus is turned on while the switch button of the display unit with an external power source is being pressed). Another problem is that since the power source of the numerical control apparatus and the built-in power source of the display unit are not synchronized with each other, only the display unit remains in operation even though the power source of the numerical control apparatus is de-energized.

Disclosure of the Invention

In view of the foregoing drawbacks of the conventional numerical control systems, it is an object of the present invention to provide a numerical control system with a plurality of display units, in which when the power source of a numerical control apparatus is turned on, a display unit with an external power source is simultaneously energized by the built-in power source of another display unit.

To achieve the above object, there is provided in accordance with the present invention a numerical control system comprising a numerical control apparatus having a power source, a first display unit with a built-in power source, a second display unit with an external power source, and power source synchronizing means for turning on/off the built-in power source of the first display unit simultaneously when the power source of the numerical control apparatus is turned on/off.

When the power source of the numerical control apparatus is turned on/off, the built-in power source of the first display unit is also synchronously turned on/off by the power source synchronizing means. When the built-in power source of the first display unit is turned on/off in synchronism with the power source of the numerical control apparatus by the power source synchronizing means, the external power source, i.e., a supplied power source, which is actually the built-in power source of the first display unit, of the second display unit is also turned on/off. Therefore, the supplied power source of the second display unit is turned on/off in synchronism with the turning-on/off of the power source of the numerical control apparatus. Inasmuch as the supplied power source of the second display unit is turned on in synchronism with the turning-on of the power source of the numerical control apparatus, the second display unit can use a special function that is performed when the power source of the numerical control apparatus is turned on.

Brief Description of the Drawings

FIG. 1 is a block diagram of a numerical control system according to the present invention;
FIG. 2 is a detailed block diagram of the numerical control system shown in FIG. 1;
FIG. 3 is a perspective view of a display unit A; and
FIG. 4 is a front elevational view of a display unit B.

Best Mode for carrying Out the Invention

An embodiment of the present invention will hereinafter be described with reference to the drawings.

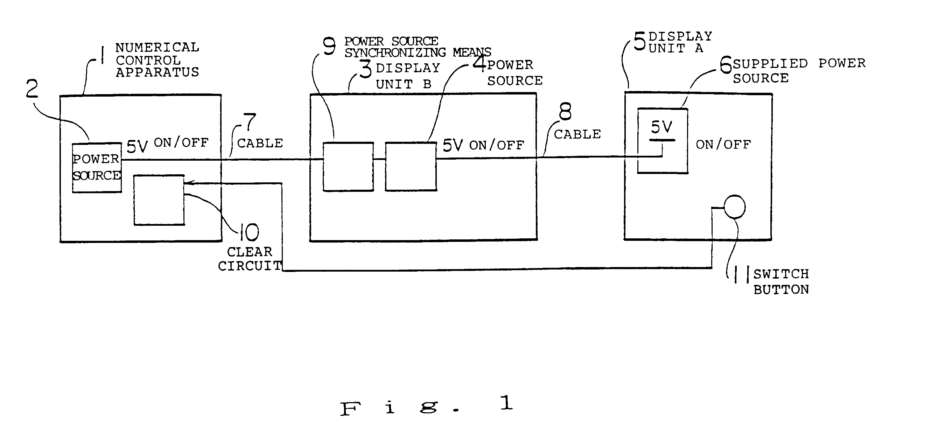

FIG. 1 shows in block form a numerical control system according to the present invention. As shown in FIG. 1, the numerical control system includes a numerical control apparatus 1 having a power source 2 therein, a display unit B3 having a built-in power source 4 therein, and a display unit A5 with no built-in power source. The display unit A5 is powered by an external power source, i.e., the built-in power source 4 of the display unit B3, which is shown as a supplied power source 6. The numerical control apparatus 1 and the display unit B3 are connected to each other by a cable 7 that serves to transfer data and commands between the numerical control apparatus 1 and the display unit B3. The display units B3, A5 are connected to each other by a cable 8 that serves to transfer data and commands from the numerical control apparatus 1 through the display unit B3 to the display unit A5.

The numerical control system also has a power source synchronizing means 9 for turning on/off the power source 4 in synchronism with the turning-on/-off of the power source 2 of the numerical control apparatus 1. A clear circuit 10 performs a special function, i.e., clears the stored contents of a memory in the numerical control apparatus 1 when the power source 2 is turned on while a switch button 11 of the display unit A5 is being pressed.

Operation of the numerical control system will be described below. When the power source 2 of the numerical control apparatus 1 is turned on/off, the power source synchronizing means 9 turns on/off the power source 4 of the display unit B3. When the power source 4 of the display unit B3 is turned on/off, the supplied power source 6 of the display unit A5 is automatically turned on/off. The clear circuit 10, which performs a special function when the power source 2 is turned on while a switch button 11 of the display unit A5 is being pressed, is disposed on the numerical control apparatus 1. Actually, the clear circuit 10 performs different functions as follows: According to the first function, the clear circuit 10 can clear all data in the memory in the numerical control apparatus 1. According to the second function, the clear circuit 10 clears parameters that have been inputted to the numerical control apparatus 1. The third function is that the clear circuit 10 clears a program that has been inputted to the numerical control apparatus 1. The fourth function is that the clear circuit 10 clears an over-travel alarm inputted to the numerical control apparatus 1, i.e., an alarm that has been activated when the mechanical movable component travels overly beyond a predetermined stroke.

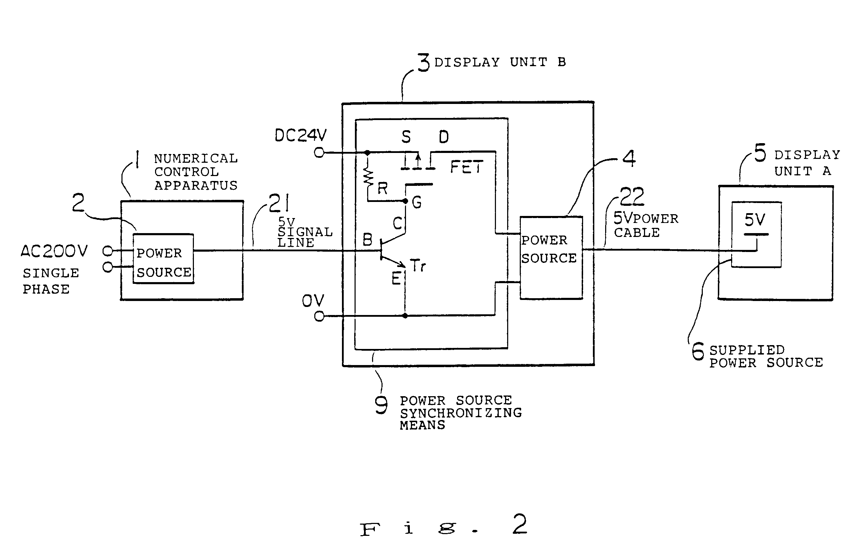

FIG. 2 shows in detailed block form the numerical control system shown in FIG. 1. A 5V signal line 21 from the power source 2 of the numerical control apparatus 1 is connected to the base B of a transistor Tr of the power source synchronizing means 9 of the display unit B3. When the power source 2 is turned on to make the 5V signal line 21 high, the transistor Tr is rendered conductive, allowing a current from a terminal of DC 24V to flow through a resistor R and the collector C and emitter E of the transistor Tr to a terminal of 0V. A voltage drop caused across the resistor R by the current develops a potential difference between the gate G and source S of an FET (P-channel field-effect transistor). The potential difference thus developed causes a current to flow between the source S and drain D of the FET, thus turning on the power source 4.

When the power source 2 is turned off to make the 5V signal line 21 low, the transistor Tr is rendered nonconductive, and the current from the terminal of DC 24V does not flow through the resistor R and the transistor Tr. Since no voltage drop is developed across the resistor R, no potential difference is developed between the gate G and source S of the FET. No current flows between the source S and drain D of the FET, turning off the power source 4. When the power source 4 is turned on/off in synchronism with the turning-on/off of the power source 2, the supplied power source 6 is also synchronously turned on/off through a 5V power cable 22.

The power source 4 is turned on/off by the FET in the above description. However, the FET is shown by way of example only, and a relay or the like may be employed to turn on/off the power source 4.

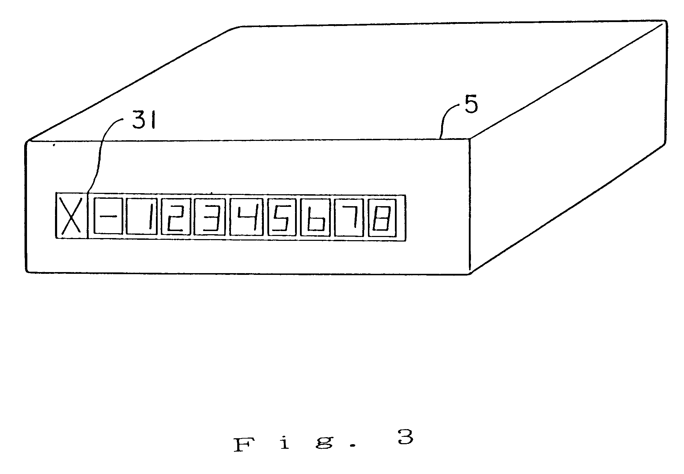

FIG. 3 shows the display unit A5 in perspective. The display unit A5 has a display window 31 for displaying coordinate positions, etc. of a numerically controlled machine, the display window 31 being disposed on a front panel of the display unit A5. The display unit A5 is supplied with electric power from an external power source, i.e., the built-in power source 4 of the display unit B3.

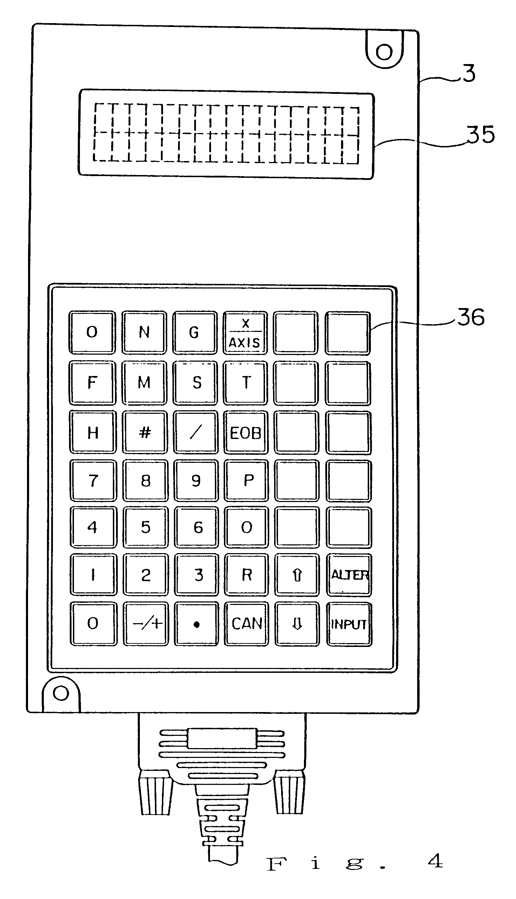

FIG. 4 shows the display unit B3 in front elevation. The display unit B3 has a display window 35 on its front panel in an upper portion thereof, and a control key set 36 on the front panel. The built-in power source 4 of the display unit B3 is turned on/off in synchronism with the turning-on/off of the power source 2 of the numerical control apparatus 1 by the power source synchronizing means 9.

In the above description, the numerical control system has two display units connected to the numerical control apparatus. However, the numerical control system may have three or more display units connected to the numerical control apparatus. The display unit B3 may be supplied with electric power from a numerically controlled machine in synchronism With the power source of the numerical control apparatus, and may supply the electric power to the display unit A5. The specific voltage used varies dependent on the circuit arrangement of the numerical control system, and hence the voltage of 5V is illustrative only.

With the present invention, as described above, the power source synchronizing means 9 is used to synchronize the built-in power source 4 of the display unit B3 with the power source 2 of the numerical control apparatus 1. Therefore, all the power sources of the numerical control system, which has a plurality of display units, are synchronized with each other. When the power source 2 of the numerical control apparatus 1 is turned on while the switch button 11 of the display unit A5 with an external power source is being pressed, various special functions can be performed by the clear circuit 10. The power sources of the display units are prevented from remaining energized when the power source 2 of the numerical control apparatus 1 is turned off.

**Claims**

1. A numerical control system comprising:

a numerical control apparatus having a power source;

a first display unit with a built-in power source;

a second display unit with an external power source; and

power source synchronizing means for turning on/off said built-in power source of the first display unit simultaneously when said power source of said numerical control apparatus is turned on/off.

2. A numerical control system according to claim 1, wherein said numerical control apparatus has a clear circuit for performing a special function of clearing stored contents of a memory in said numerical control apparatus when said power source of the numerical control apparatus is turned on while a switch button of said second display unit that is supplied with electric power from said built-in power source as the external power source is being pressed.

3. A numerical control system according to claim 2, wherein said special function is to clear all data stored in said memory in said numerical control apparatus.

4. A numerical control system according to claim 2, wherein said special function is to clear parameters inputted to said numerical control apparatus.

5. A numerical control system according to claim 2, wherein said special functions is to clear a program inputted to said numerical control apparatus.

6. A numerical control system according to claim 2, wherein said special function is to clear an over-travel alarm inputted to said numerical control apparatus.

EP 0 476 142 A1

1 NUMERICAL CONTROL APPARATUS

2 POWER SOURCE

5V ON/OFF

7 CABLE

10 CLEAR CIRCUIT

9 POWER SOURCE SYNCHRONIZING MEANS

3 DISPLAY UNIT B

4 POWER SOURCE

5V ON/OFF

8 CABLE

5 DISPLAY UNIT A

6 SUPPLIED POWER SOURCE

5V

ON/OFF

11 SWITCH BUTTON

F i g .  1

Fig. 2

Fig. 3

Fig. 4

# INTERNATIONAL SEARCH REPORT

International Application No PCT/JP91/00355

**I. CLASSIFICATION OF SUBJECT MATTER** (if several classification symbols apply, indicate all) [6]

According to International Patent Classification (IPC) or to both National Classification and IPC

Int. Cl[5]  G05B19/18

**II. FIELDS SEARCHED**

| Minimum Documentation Searched [7] | |
|---|---|
| Classification System | Classification Symbols |
| IPC | G05B19/18, G06F1/00, 334, G06F1/00, 350 |

Documentation Searched other than Minimum Documentation
to the Extent that such Documents are Included in the Fields Searched [8]

| | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X,Y | JP, A, 58-115512 (Fujitsu Ltd.), July 9, 1983 (09. 07. 83), Line 14, upper left column to line 1, upper right column, page 2 (Family: none) | 1-6 |
| X,Y | JP, A, 01-59414 (Hitachi, Ltd.), March 7, 1989 (07. 03. 89), Lines 2 to 6, lower right column, page 1 (Family: none) | 1-6 |
| Y | JP, A, 51-97929 (Sharp Corp.), August 28, 1976 (28. 08. 76), Lines 6 to 13, upper left column, page 2 (Family: none) | 2-6 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 11, 1991 (11. 06. 91) | July 1, 1991 (01. 07. 91) |
| International Searching Authority | Signature of Authorized Officer |
| Japanese Patent Office | |

Form PCT/ISA/210 (second sheet) (January 1985)